# FASCICULE DE BREVET EUROPEEN

(11) **EP 3 683 101 B1**
(45) Date de publication et mention de la délivrance du brevet: **13.11.2024**
(21) Numéro de dépôt: 20154932.6
(22) Date de dépôt: 01.03.2012
(51) Int. Cl.: B60R 25/00

(54) **DISPOSITIF, SYSTEME ET PROCEDE POUR LE PARTAGE DE VEHICULES**
VORRICHTUNG, SYSTEM UND VERFAHREN ZUR GEMEINSAMEN NUTZUNG VON FAHRZEUGEN
DEVICE, SYSTEM AND METHOD FOR VEHICLE SHARING

(30) Priorité: 02.03.2011 FR 1151685
(43) Date de publication de la demande: 22.07.2020
(62) Demande divisionnaire de: 12712306.5
(73) Titulaire: PVP Technologies Canada Inc., Montreal, Québec H2T 3B3 (CA)
(72) Inventeur: SAVOURE, Stéphane, KIRKLAND, H9J2H3 (CA)
(74) Mandataire: Ex Materia

(56) Documents cités:
- EP-A1- 1 583 041
- WO-A2-2007/106875
- US-A1- 2010 073 130

## Description

La présente invention se rapporte à un dispositif de sécurité prévu pour sécuriser l'usage d'un véhicule mis en partage entre plusieurs utilisateurs ou d'un véhicule de location, notamment pour s'assurer que le véhicule est bien utilisé par l'utilisateur prévu.

Dans ce contexte de partage ou de location de véhicule entre particuliers, il est pratique de laisser une clé de contact à l'intérieur du véhicule, généralement dans la boîte à gants. Ainsi, il n'y a plus d'échange direct de clés avec le propriétaire, ce qui est contraignant. Cependant, sans un dispositif ou un procédé de sécurité approprié, le véhicule devient une cible facile pour des voleurs.

On connaît des dispositifs de type coupe-circuit électronique, employés dans ces cas. Cependant, ils présentent tous au moins deux inconvénients majeurs :
- L'installation d'un boîtier agissant comme coupe-circuit nécessite d'intervenir sur le câblage électrique du véhicule, ce qui complique l'installation du dispositif et peut entraîner l'annulation de la garantie constructeur.
- La plupart des véhicules modernes sont équipés d'un système antivol perfectionné fonctionnant avec un dispositif de détection de la proximité de la clé du véhicule. Ainsi, le véhicule ne peut démarrer que si une clé valide est effectivement dans ou à proximité du véhicule. Dès lors qu'une clé, prévue pour le partage du véhicule, se trouve dans le véhicule, un dispositif de type coupe-circuit offre un niveau de protection inférieur au niveau de protection d'origine du véhicule (protection constructeur). Ceci peut entraîner un problème au niveau de la police d'assurance.

On connaît notamment des systèmes pour donner accès à un véhicule enseignés par les documents WO2007/1068751, EP 1 583 041 et US 2010/073130.

L'invention a pour but de proposer un dispositif de protection renforcée permettant de mettre un véhicule à la disposition de plusieurs utilisateurs, une clé de contact étant laissée à disposition dans le véhicule, tout en s'assurant, lorsqu'une personne démarre le véhicule, que cette personne est bien un utilisateur autorisé.

Les véhicules récents sont équipés de clés intelligentes, chacune contenant une puce électronique active ou passive qui rend cette clé unique. Dans chaque véhicule, il y a un ordinateur embarqué, souvent appelé ECU (Engine Control Unit), dans lequel est mémorisé un identifiant pour chaque clé autorisée à démarrer ce véhicule. Ainsi, seule une clé dont l'identifiant a été mémorisé dans le véhicule est apte à désactiver le dispositif anti-démarrage, donc à autoriser la conduite du véhicule.

Il existe notamment des outils permettant de programmer une nouvelle clé, par exemple lorsqu'une clé a été perdue. En règle générale, seul un concessionnaire agréé peut programmer une nouvelle clé en connectant un outil dédié sur un bus logiciel CAN accessible sur un port OBD (On Bord Diagnostics, par exemple de type OBD-II) du véhicule.

Pour atteindre ce but et selon un premier de ses objets, l'invention propose un dispositif pour autoriser l'usage d'un véhicule, est caractérisé en ce qu'il comprend des moyens de connexion avec des moyens propres au véhicule pour accréditer des clés de contact, de préférence via un bus logiciel CAN, de préférence accessible par un port OBD, des moyens de mémoire pour conserver des paramètres d'identification d'une clef de partage, des moyens pour reconnaître la présence d'un utilisateur autorisé, et, des moyens pour autoriser l'usage de la clef de partage par ledit utilisateur.

Les moyens pour autoriser l'usage de la clé peuvent comprendre des moyens d'activation / désactivation de la clé, les paramètres d'identification de la clé étant préalablement mémorisés dans le dispositif d'accréditation. Alternativement, les moyens pour autoriser l'usage de la clé peuvent comprendre des moyens pour enregistrer les paramètres d'identification de la clé dans le dispositif d'accréditation lorsque l'usage de la clé de partage est autorisé et pour effacer les paramètres d'identification de la clé dans le dispositif d'accréditation lorsque l'usage de la clé de partage est interdit.

Les moyens pour détecter la présence d'un utilisateur peuvent comprendre des moyens d'antenne RFID.

Le dispositif peut en outre comprendre des moyens pour déterminer la position du véhicule et des moyens pour transmettre cette position à un serveur distant. Le dispositif peut aussi comprendre des moyens pour recevoir des informations de disponibilité et/ou de réservation, depuis un serveur distant. Ce dispositif peut encore comprendre des moyens pour envoyer un ordre d'ouverture de porte au véhicule.

Selon un second objet de l'invention, un système de partage d'au moins un véhicule, selon l'invention, est caractérisé en ce que chaque véhicule comprend un dispositif de partage selon l'invention et au moins un serveur distant pour échanger des informations de partage, notamment de position et/ou de disponibilité et/ou de réservation, avec un poste distant et/ou avec le dispositif de partage. Un tel système comprend avantageusement un dispositif de reconnaissance propre à chaque utilisateur.

Selon un troisième objet de l'invention, un procédé d'autorisation d'usage pour un véhicule partagé, selon l'invention, est caractérisé en qu'il comprend la fourniture d'un dispositif selon l'invention et sa connexion avec les moyens propres au véhicule pour accréditer des clés de contact, de préférence via un bus logiciel CAN, de préférence accessible par un port OBD, et des étapes pour autoriser l'usage de la clé de partage par un utilisateur autorisé et interdire l'usage de ladite clé par un autre utilisateur.

Les étapes pour autoriser l'usage de la clef peuvent comprendre une étape pour enregistrer préalablement les paramètres d'identification de la clé dans les moyens d'accréditation et une étape pour ensuite activer ladite clé, et, les étapes pour interdire l'usage de ladite clé peuvent comprendre une étape pour désactiver la clé sans effacer les paramètres d'identification de la clé préalablement enregistrés dans les moyens d'accréditation. Alternativement, les étapes pour autoriser l'usage de la clef peuvent comprendre une étape pour enregistrer les paramètres d'identification de la clé dans les moyens d'accréditation, et, les étapes pour interdire l'usage de ladite clé peuvent comprendre une étape pour effacer les paramètres d'identification de la clé préalablement enregistrés dans les moyens d'accréditation.

Par ailleurs, un procédé d'autorisation d'usage pour un véhicule partagé selon l'invention peut se caractériser en ce qu'il comprend l'utilisation d'un système de partage prévu pour prendre un état pour un usage "propriétaire" et un état pour un usage partagé, dans lequel l'usage propriétaire est libre de toute surveillance par ledit système de partage. Ainsi, le propriétaire peut utiliser son véhicule comme un véhicule ordinaire, non équipé pour le partage, sans que les heures, durées et localisations d'utilisation ne soient enregistrées ou transmises au serveur central. Par exemple, la position du véhicule peut n'être enregistrée que lorsque le propriétaire définit une période de disponibilité.

Dans ce document, on appelle clé tout dispositif prévu pour mettre le contact d'un véhicule, que ce dispositif ait une forme classique de clé prévue pour être introduite dans un orifice de type serrure, ou, comme c'est de plus en plus souvent le cas, celle d'une carte que l'on introduit dans une fente. Les clés de forme classique comportent généralement une commande d'ouverture de portes à distance, par appuis sur un bouton ; les cartes comportent généralement une fonction d'ouverture de portes sans contact, de type capacitif.

Plusieurs modes d'exécution de l'invention seront décrits ci-après, à titre d'exemples non limitatifs, en référence aux dessins annexés dans lesquels :
- la figure 1 illustre un système mettant en oeuvre l'invention ; et,
- La figure 2 est un logigramme illustrant un fonctionnement possible pour le système de la figure 1.

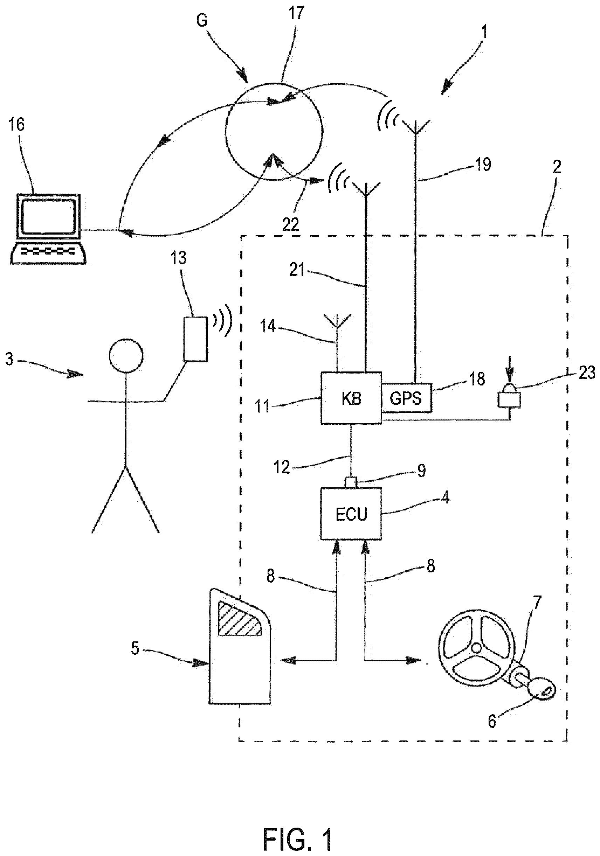

La figure 1 est une représentation schématique d'un système 1 permettant de mettre en oeuvre un service de partage d'une automobile 2 entre plusieurs utilisateurs 3 du service de partage. L'automobile 2 est figurée à la figure 1 par un rectangle en traits interrompus. Le service de partage est géré par un gestionnaire G.

L'automobile 2 comprend notamment un boîtier de contrôle 4 de type ordinateur embarqué (ECU, c'est à dire Engine Control Unit, en anglais, Unité de contrôle moteur, en français). Le boîtier de commande 4 est monté d'origine sur le véhicule 2, il permet de contrôler divers équipements du véhicule, notamment l'ouverture des portes 5. Des bus de données 8 spécifiques permettent de relier le boîtier de contrôle 4 avec chacun de ces équipements. Il autorise aussi le démarrage du véhicule 2 lorsqu'une clé de contact appropriée est introduite dans le dispositif de démarrage 7, ou lorsque le conducteur appuie sur un bouton de démarrage. C'est dans le boîtier de contrôle que sont stockés les identifiants des clés (généralement deux) autorisées à ouvrir et démarrer le véhicule.

Le boîtier de contrôle comprend en outre un port informatique 9 - par exemple de type connu sous l'abréviation OBD-II (On Board Diagnostic, version II) - qui permet notamment à un technicien de se connecter au boîtier de contrôle 4 afin de faire un diagnostique du fonctionnement du véhicule 2. C'est aussi par ce moyen qu'un technicien peut aussi enregistrer une nouvelle clé, notamment pour remplacer une clé perdue ; la clé perdue peut aussi être déprogrammée, afin qu'elle ne puisse plus être utilisée, notamment par une personne mal intentionnée qui aurait dérobé cette clé dans ce but.

L'automobile comprend en outre un boîtier de partage 11 (KB), dédié à la fonction partage de l'invention ; c'est-à-dire que c'est essentiellement grâce à ce boîtier que plusieurs utilisateurs peuvent partager le véhicule en toute sécurité. Dans l'exemple décrit, ce boîtier est spécifique et n'est pas monté d'origine sur le véhicule. Le boîtier de partage 11 est relié au port 9 par un bus 12.

Les personnes qui veulent utiliser un tel véhicule, mis en partage par son propriétaire, qu'il soit une personne physique ou morale, sont inscrites auprès du gestionnaire G. Le gestionnaire G met à disposition de chacun des utilisateurs du système 1 des moyens de reconnaissance 13, 14 lui permettant d'être reconnu comme un utilisateur par le système 1. Dans l'exemple illustré, les moyens de reconnaissance comprennent notamment une carte RFID 13, fournie à chaque utilisateur 3 et une antenne RFID 14 équipant le boîtier de partage 11.

Dans l'exemple illustré, pour qu'un utilisateur 3 reconnu soit autorisé à utiliser le véhicule 2, il faut que le véhicule soit disponible et que l'utilisateur l'ait réservé.

Un terminal distant 16 peut être utilisé pour la mise à disposition et/ou la réservation du véhicule 2. Ce poste distant peut être un poste fixe, tel qu'illustré à la figure 1, ou un terminal mobile, par exemple un téléphone mobile.

Le gestionnaire G comprend un serveur informatique 17 qui gère les mises à dispositions, les réservations et la position du véhicule 2.

La position du véhicule est calculée par un dispositif de positionnement global 18, par exemple du type GPS (Global Positioning System). La position est ensuite transmise au serveur par des moyens de téléphonie sans fil 19, par exemple de type GSM. Ainsi, le serveur peut être informé de la position exacte de chaque véhicule dont il assure la gestion ; cette information peut être utilisée pour informer un utilisateur qui cherche un véhicule à emprunter dans une zone donnée, et, un réservataire de la position exacte du véhicule qu'il doit emprunter ; cette information est aussi utilisée pour informer le propriétaire de la position de son véhicule lorsqu'il souhaite en reprendre possession.

De préférence, les informations relatives à la position du véhicule ne sont pas transmises au serveur, ou recueillies par le serveur 17, lorsque le véhicule est indisponible ou utilisé par un réservataire, sauf pour informer le propriétaire de la position du véhicule s'il n'en a pas déjà repris possession. Ainsi, la confidentialité des déplacements est préservée, que ce soit ceux du réservataire ou ceux du propriétaire du véhicule, particulièrement si le propriétaire est une personne physique.

Le boîtier de partage 11 comprend des moyens de téléphonie sans fil 21 pour communiquer avec le serveur 17. Ainsi, au moyen d'une transmission bidirectionnelle 22, le boîtier de partage peut notamment être informé que le véhicule qui en est équipé est disponible, ou, que l'utilisateur 3 qui se présente en est bien le réservataire.

Le système 1 comprend en outre un bouton de libération 23 monté dans le véhicule en liaison avec le boîtier de partage 11 ; lorsqu'un utilisateur veut mettre un terme à sa réservation, et libérer le véhicule, il lui suffit d'appuyer sur le bouton 23.

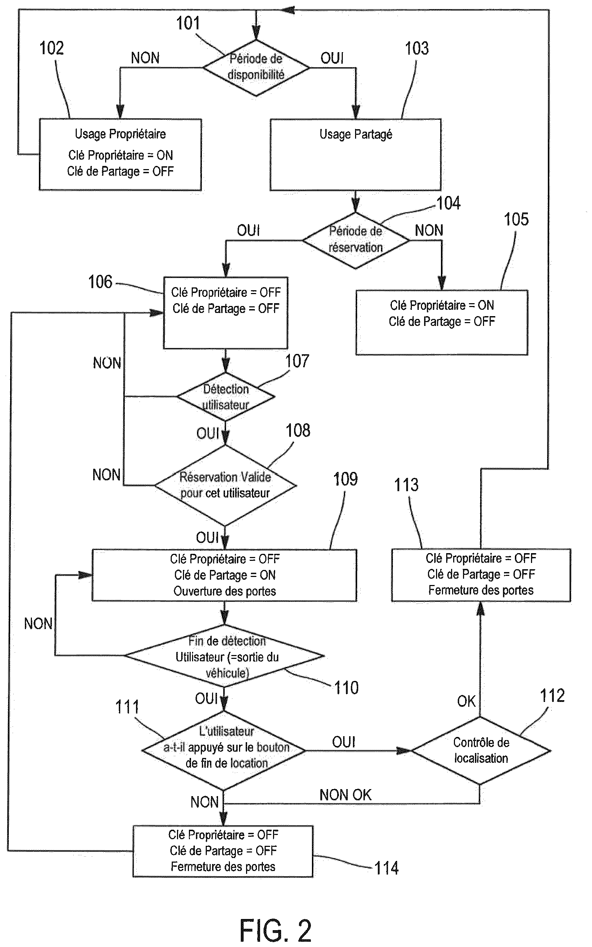

Dans l'exemple illustré à la figure 2, le propriétaire du véhicule est supposé être une personne physique, utilisant de façon privative son véhicule, en dehors de plages de disponibilité. Ces plages de disponibilité sont renseignées par le propriétaire auprès du gestionnaire du service de partage. Les utilisateurs 3 du service de partage peuvent donc utiliser le véhicule durant ces plages de disponibilité.

La figure 2 illustre sous la forme d'un organigramme, le fonctionnement d'un boîtier de partage 11 apte à être utilisé dans un système 1 tel que précédemment décrit en référence à la figure 1.

Dans sa disposition initiale 101, le boîtier de partage 11 est dans une position d'attente dans laquelle il vérifie si une période de disponibilité est en cours. Tant que le boîtier n'est pas informé de la mise en disponibilité du véhicule, un usage propriétaire 102 est maintenu. Dans les conditions d'usage "propriétaire", l'usage de la clé de partage n'est pas autorisé et celui de la clé propriétaire est maintenu autorisé. Aucune surveillance du véhicule n'est faite, en particulier la position du véhicule n'est pas relevée par le système. Seule la clé du propriétaire permet de démarrer le véhicule. L'ouverture des portes se déclenche uniquement avec le dispositif d'origine du constructeur. Dans cet état 102, le boîtier de partage n'est pas utilisé pour détecter la présence du propriétaire, ni celle d'un autre utilisateur.

Lorsque le boîtier KB est informé d'une période de disponibilité, la fonction "usage partagé" 103 est mise en oeuvre. Dans cette position, le boîtier vérifie 104 si une période de réservation a débuté et le boîtier de partage surveille l'utilisation du véhicule. Si aucune réservation n'est en cours, un usage propriétaire 105 est maintenu, seul l'usage de la clé propriétaire est autorisé. Le propriétaire conserve une priorité sur l'usage du véhicule ; il peut l'utiliser dans une situation d'urgence. Si le propriétaire utilise effectivement son véhicule, le boîtier de partage 11 détecte cet usage par le propriétaire et en informe le serveur distant 17. Des opérations peuvent alors être déclenchées par le serveur 17, notamment relatives au maintien en disponibilité du véhicule ou relatives aux réservations à venir.

Si, durant la position "usage partagé" 103, une période de réservation a débuté, l'usage des deux clés, propriétaire et de partage n'est plus autorisé, dans l'attente de l'utilisateur réservataire. Ainsi, le boîtier 11 se met dans une position d'attente 106 pendant laquelle il vérifie 107 la présence ou non d'un utilisateur, et, si un utilisateur se présente, il vérifie 108 si cet utilisateur a une réservation en cours de validité.

Lorsqu'un utilisateur ayant une réservation valide est détecté, le système se met dans une configuration 109 dans laquelle l'usage de la clé de partage est autorisé, et l'usage de celle du propriétaire interdit ; l'ouverture des portes du véhicule est déclenchée et l'utilisateur peut utiliser le véhicule avec la clé de partage.

Dans la configuration d'usage 109, le boîtier de partage surveille 110 la présence de l'utilisateur dans le véhicule. Si l'utilisateur réservataire quitte le véhicule, le boîtier vérifie si le bouton de libération 23 a été appuyé. Si ce n'est pas le cas, une opération de sécurisation 114 est déclenchée : l'usage de la clé de partage est interdit, l'interdiction de celle du propriétaire est maintenue et les portes sont fermées. Le boîtier 11 revient dans la position d'attente 106, dans l'attende du retour du même utilisateur.

Si, au contraire, l'utilisateur quitte le véhicule en appuyant sur le bouton de libération, le système 1 effectue des opérations de contrôle 112, notamment celui de la localisation du véhicule. Si le résultat des opérations de contrôle 112 est négatif, notamment si le véhicule n'est pas garé à un endroit prévu, les opérations de sécurité 114 sont déclenchées : l'usage de la clé de partage est interdit, l'interdiction de celle du propriétaire est maintenue et les portes sont fermées. Le boîtier 11 revient dans la position d'attente 106, dans l'attende du retour du même utilisateur.

Si le résultat de l'opération de contrôle 112 est positif, des opérations de sécurité 113 sont déclenchées : l'usage de la clé de partage est interdit, l'interdiction de celle du propriétaire est maintenue et les portes sont fermées. Le boîtier 11 revient dans la position d'attente initiale 101, dans laquelle le boîtier vérifie si une période de disponibilité est en cours.

Deux procédés pour autoriser l'usage de la clé de partage, ou pour en interdire l'usage, peuvent être utilisés, l'un à l'exclusion de l'autre, selon le mode de fonctionnement choisi pour le boîtier de partage 11 (KB).

Selon un premier procédé, dit d'activation, l'identifiant de la clé est enregistré dans le boîtier de contrôle 4, et y est maintenu. La clé 6 restant identifiée par le véhicule, le boîtier de partage envoie une autorisation d'utilisation, ou d'interdiction d'usage pour la clé de partage 6.

Selon le deuxième procédé, dit de programmation, l'identifiant de la clé est seulement enregistré dans le boîtier de contrôle 4 lors de l'activation de la clé, comme le serait une nouvelle clé. Lors de la désactivation, l'identifiant est effacé de la mémoire du boîtier de contrôle, comme le serait une clé perdue ou volée. Dans ce deuxième procédé, l'identifiant de la clé de partage est donc mémorisé dans le boîtier de partage, qui le transmet en temps utile au boîtier de contrôle.

Bien sûr, l'invention n'est pas limitée aux modes de réalisation préférés qui viennent d'être décrits.

Ainsi, il peut être prévu qu'un utilisateur du service de partage ne réserve pas le véhicule préalablement. Il peut être prévu, lorsque l'utilisateur est reconnu, une procédure qui lui permette d'utiliser le véhicule, dés lors que celui-ci est disponible.

Les moyens de téléphonie sans fil utilisés par le boîtier de partage peuvent être les mêmes que les moyens de téléphonie sans fil utilisés par le dispositif de positionnement. C'est le cas lorsque le dispositif de positionnement est une partie intégrante du boîtier de partage ; les moyens d'antenne ou de modem pouvant être partagés. Au contraire, si le système de positionnement du véhicule 2 fait partie de ses équipements d'origine, le boîtier de partage et le dispositif de positionnement peuvent utiliser des moyens de téléphonie indépendants, qui leur sont propres.

Lorsque le propriétaire définit une période de disponibilité avant le début de cette période de disponibilité, il peut être prévu la possibilité que le propriétaire informe le serveur de l'adresse à laquelle le véhicule sera disponible. Ainsi, un premier utilisateur pourra réserver le véhicule à l'avance, sans qu'il soit nécessaire d'attendre le début de la période de disponibilité pour connaître les coordonnées du véhicule.

De la description qui vient d'être faite, il apparaît clairement que l'invention proposée consiste à utiliser l'interface logicielle conçue initialement pour programmer les clés du véhicule, dans le contexte du partage d'un ou plusieurs véhicules, afin de le ou les protéger contre le vol.

Dans l'application illustrée, le boîtier de partage est relié par un câble à un port existant de l'ECU du véhicule. Toutes les informations nécessaires à l'ouverture des portes et aux commandes antivol passent par ce câble. L'installation ne nécessite donc aucun câblage particulier, aucune soudure, ni aucune modification des dispositions et des fonctions d'origine du véhicule. L'installation d'un boîtier de partage selon l'invention ne nécessite donc aucune compétence particulière et peut être effectuée directement par le propriétaire du véhicule. Il peut donc être qualifié, selon un anglicisme courant, de "plug and play".

De ce fait, aucune modification n'étant apportée au câblage ni aux fonctions d'origine du véhicule, donc en garantissant au moins le même niveau de protection contre le vol, l'utilisation d'un boîtier selon l'invention ne pose de problème, ni vis-à-vis de la garantie constructeur, ni vis-à-vis d'une police d'assurance.

Le boîtier de partage fonctionne comme un interrupteur sophistiqué, qui, notamment, activerait et désactiverait la clef de partage, tout en restant totalement transparent pour l'utilisateur.

Un boîtier de partage selon l'invention et un système de partage selon l'invention sont donc particulièrement avantageux.

## Revendications

1. Système (1) pour autoriser l'usage d'un véhicule (2), comprenant un boîtier de partage (11) prévu pour être monté dans ledit véhicule, des moyens (12) pour connecter ledit boitier (11) à des moyens (4) pour accréditer des clefs de contact, ces moyens d'accréditation étant propres au véhicule, de préférence via un bus logiciel CAN (12), de préférence accessible par un port OBD (9), et, des moyens (13,14) pour reconnaître la présence d'un utilisateur autorisé (3), ledit boitier (11) comprenant des moyens de mémoire pour conserver des paramètres d'identification d'une clef de partage (6) et des moyens pour autoriser l'usage de la clef de partage par ledit utilisateur,
**caractérisé en ce que** les moyens pour autoriser l'usage de la clef comprennent des moyens pour enregistrer les paramètres d'identification de la clef dans lesdits moyens d'accréditation (4) lorsque l'usage de la clef de partage est autorisé et pour effacer les paramètres d'identification de la clef dans lesdits moyens d'accréditation, lorsque l'usage de la clef de partage est interdit.

2. Système selon la revendication 1, **caractérisé en ce que** les moyens pour détecter la présence d'un utilisateur comprennent des moyens d'antenne RFID (14).

3. Système selon l'une des revendications 1 et 2, **caractérisé en ce que** le dispositif comprend des moyens (18) pour déterminer la position du véhicule et des moyens (16) pour transmettre ladite position à un serveur (17) distant.

4. Système selon l'une des revendications 1 à 3, **caractérisé en ce qu'**il comprend des moyens (21) pour recevoir des informations de disponibilité et/ou de réservation, depuis un serveur distant (17).

5. Système selon l'une des revendications 1 à 4, **caractérisé en ce qu'**il comprend des moyens (8) pour envoyer un ordre d'ouverture de porte au véhicule.

6. Système selon l'une des revendications 1 à 5, **caractérisé en ce qu'**il comprend au moins un serveur distant (17) pour échanger des informations de partage, notamment de position et/ou de disponibilité et/ou de réservation, avec un poste distant (16) et/ou avec le dispositif de partage (11).

7. Système selon la revendication 6, **caractérisé en ce qu'**il comprend en outre au moins un dispositif de reconnaissance (13) propre à chaque utilisateur.

8. Procédé d'autorisation d'usage pour un véhicule partagé, comprenant la fourniture d'un système (1) selon l'une des revendications 1 à 7 et la connexion dudit dispositif (11) avec les moyens propres au véhicule pour accréditer des clés de contact, de préférence via un bus logiciel CAN (12), de préférence accessible par un port OBD (9), et des étapes pour autoriser l'usage de la clé de partage (6) par un utilisateur (3) autorisé et interdire l'usage de ladite clé par un autre utilisateur,
**caractérisé en ce que** les étapes pour autoriser l'usage de la clef comprennent une étape pour enregistrer les paramètres d'identification de la clé dans les moyens d'accréditation (4), et, **en ce que** les étapes pour interdire l'usage de ladite clé comprennent une étape pour effacer les paramètres d'identification de la clé préalablement enregistrés dans les moyens d'accréditation.

9. Procédé selon la revendication 8 quand il comprend la fourniture d'un système selon l'une des revendications 6 ou 7, **caractérisé en ce que** ledit système est prévu pour prendre un état (102) pour un usage propriétaire et un état (103) pour un usage partagé, et dans lequel l'usage propriétaire est libre de toute surveillance par ledit système de partage (1).

## Patentansprüche

1. System (1) zum Gestatten der Nutzung eines Fahrzeugs (2), das ein gemeinsam genutztes Gehäuse (11) umfasst, das dazu vorgesehen ist, in dem Fahrzeug montiert zu sein, Mittel (12), um das Gehäuse (11) mit Mitteln (4) zum Bestätigen der Zündschlüssel zu verbinden, wobei diese Bestätigungsmittel dem Fahrzeug eigen sind, bevorzugt über einen CAN-Softwarebus (12), der bevorzugt durch einen OBD-Port (9) zugänglich ist, und Mittel (13, 14) zum Erkennen der Gegenwart eines befugten Benutzers (3), wobei das Gehäuse (11) Speichermittel umfasst, um Identifikationsparameter eines Schlüssels zur gemeinsamen Nutzung (6) zu wahren, und Mittel zum Gestatten der Nutzung des gemeinsam genutzten Schlüssels durch den Benutzer,
**dadurch gekennzeichnet, dass** die Mittel zum Gestatten der Nutzung des Schlüssels Mittel zum Aufzeichnen der Identifikationsparameter des Schlüssels in den Bestätigungsmitteln (4) umfassen, wenn die Nutzung des gemeinsam genutzten Schlüssels gestattet wird, und um die Identifikationsparameter des Schlüssels in den Bestätigungsmitteln zu löschen, wenn die Nutzung des gemeinsam genutzten Schlüssels verboten ist.

2. System nach Anspruch 1, **dadurch gekennzeichnet, dass** die Mittel zum Erfassen der Gegenwart eines Benutzers RFID-Antennenmittel (14) umfassen.

3. System nach einem der Ansprüche 1 und 2, **dadurch gekennzeichnet, dass** die Vorrichtung Mittel (18) zum Bestimmen der Position des Fahrzeugs und Mittel (16) zum Übertragen der Position an einen entfernten Server (17) umfasst.

4. System nach einem der Ansprüche 1 bis 3, **dadurch gekennzeichnet, dass** es Mittel (21) zum Empfangen der Verfügbarkeits- und/oder Reservierungsinformationen von einem entfernten Server (17) umfasst.

5. System nach einem der Ansprüche 1 bis 4, **dadurch gekennzeichnet, dass** es Mittel (8) zum Senden eines Türöffnungsbefehls an das Fahrzeug umfasst.

6. System nach einem der Ansprüche 1 bis 5, **dadurch gekennzeichnet, dass** es mindestens einen entfernten Server (17) zum Austauschen der Informationen zur gemeinsamen Nutzung, insbesondere zur Position und/oder Verfügbarkeit und/oder Reservierung, mit einem entfernten Posten (16) und/oder mit der Vorrichtung zur gemeinsamen Nutzung (11) umfasst.

7. System nach Anspruch 6, **dadurch gekennzeichnet, dass** es außerdem mindestens eine Erkennungsvorrichtung (13), die jedem Benutzer eigen ist, umfasst.

8. Verfahren zum Gestatten der Nutzung für ein gemeinsam genutztes Fahrzeug, das die Lieferung eines Systems (1) nach einem der Ansprüche 1 bis 7 und die Verbindung der Vorrichtung (11) mit den Mitteln, die dem Fahrzeug eigen sind, umfasst, um Zündschlüssel zu bestätigen, bevorzugt über einen CAN-Softwarebus (12), der bevorzugt durch einen OBD-Port (9) zugänglich ist, und Schritte zum Gestatten der Nutzung des gemeinsam genutzten Schlüssels (6) durch einen befugten Benutzer (3) und Verbieten der Nutzung des Schlüssels durch einen anderen Benutzer,
**dadurch gekennzeichnet, dass** die Schritte zum Gestatten der Nutzung des Schlüssels einen Schritt zum Aufzeichnen der Identifikationsparameter des Schlüssels in den Bestätigungsmitteln (4) umfassen, und dass die Schritte zum Verbieten der Nutzung des Schlüssels einen Schritt umfassen, um die Identifikationsparameter des Schlüssels, die zuvor in den Bestätigungsmitteln aufgezeichnet wurden, zu löschen.

9. Verfahren nach Anspruch 8, wenn es die Lieferung eines Systems nach einem der Ansprüche 6 oder 7 umfasst,
**dadurch gekennzeichnet, dass** das System dazu vorgesehen ist, einen Zustand (102) für eine Eigentümernutzung und einen Zustand (103) für eine gemeinsame Nutzung einzunehmen, und wobei die Eigentümernutzung frei von jeder Überwachung durch das System zur gemeinsamen Nutzung (1) ist.

## Claims

1. A system (1) for authorising the use of a vehicle (2) comprising a sharing box (11) intended to be mounted in said vehicle, means (12) of connecting said box (11) to means (4) to accredit ignition keys, such accreditation means being specific to the vehicle, preferably via a CAN software bus (12), preferably accessible via an OBD port (9), and, means (13, 14) of recognizing the presence of an authorised user (3), said box (11) comprising means of memory for storing the identification parameters of a shared key (6) and means of authorising the use of a shared key by said user, **characterised in that** the means of authorising the use of the key comprise means of saving the identification parameters of the key in said means of accreditation (4) when the use of the shared key is authorised and in order to delete the identification parameters of the key in said means of accreditation, when the use of the shared key is prohibited.

2. The system according to claim 1, **characterised in that** the means of detecting the presence of a user comprise RFID antenna means (14).

3. The system according to one of claims 1 and 2, **characterised in that** the device comprises means (18) of determining the position of the vehicle and means (16) of transmitting said position to a remote server (17).

4. The system according to one of claims 1 to 3, **characterised in that** same comprises means (21) of receiving information on availability and/or booking, from a remote server (17).

5. The system according to one of claims 1 to 4, **characterised in that** same comprises means (8) of sending the vehicle an order to open the door.

6. The system according to one of claims 1 to 5, **characterised in that** same comprises at least a remote server (17) for exchanging sharing information, in particular on position and/or availability and/or booking, with a remote station (16) and/or with the sharing device (11).

7. The system according to claim 6, **characterised in that** same further comprises at least one recognition device (13) specific to each user.

8. A method of authorising a use for a shared vehicle, comprising the supply of a system (1) according to one of claims 1 to 7 and the connection of said device (11) with the means specific to the vehicle in order to accredit the contact keys, preferably via a CAN software bus (12), preferably accessible via an OBD port (9), and steps for authorising the use of the shared key (6) by an authorised user (3) and prohibiting the use of said key by another user,
**characterised in that** the steps for authorising the use of the key comprise a step for saving the identification parameters of the key in the means of accreditation (4), and, **in that** the steps for prohibiting the use of said key comprise a step for deleting the identification parameters of the key previously saved in the means of accreditation.

9. The method according to claim 8 when same comprises the supply of a system according to one of claims 6 or 7,
**characterised in that** said system is intended for taking up a state (102) for a proprietary use and a state (103) for a shared use, and wherein the proprietary use is free from any monitoring from said sharing system (1).
